# EUROPÄISCHE PATENTANMELDUNG

(11) **EP 1 413 479 A2**
(43) Veröffentlichungstag der Anmeldung: **28.04.2004**
(21) Anmeldenummer: 03017740.6
(22) Anmeldetag: 04.08.2003
(51) Int. Cl.: B60P 7/08

(54) **Transportsicherungsanordnung**

(30) Priorität: 04.10.2002 DE 10246204; 08.04.2003 DE 10315895
(71) Anmelder: Schwingenstein, Claudia Rosina, 86830 Schwabmünchen (DE)
(72) Erfinder: Schwingenstein, Claudia Rosina, 86830 Schwabmünchen (DE)
(74) Vertreter: Mollekopf, Gerd Willi, Dr.

(57) **Zusammenfassung**

Die Erfindung betrifft eine Transportsicherungsanordung für auf einer Ladefläche (1) zu sicherndes Transportgut (3) mit zumindest einem, seitlich am Transportgut anordenbarem Halteelement (30), zumindest einem Vertikalhalteelement (20) und zumindest einem mit dem zumindest einen Halteelement (30) verbundenen Zug- oder Zurrelement (7), wobei das zumindest eine Vertikalhalteelement (20) das zumindest eine Halteelement (30) in vertikale Richtung beabstandet zur Ladefläche (1) hält, vorzugsweise im oberen Seitenbereich des Transportguts (3), und das zumindest eine Zug- oder Zurrelement (7) von dem Halteelement (30) zur gegenüberliegenden Seite des Transportguts verläuft und im Bereich der gegenüberliegenden Seite des Transportguts an der Ladefläche (1) befestigt oder dort umgelenkt ist. Die Transportanordnung sichert das Tranportgut gegen ein seitliches Abrutschen und Kippen.

## Beschreibung

Die Erfindung betrifft eine Transportsicherungsanordnung zur Sicherung von Transportgut auf einer Ladefläche.

Bei der herkömmlichen Transportsicherungsanordnung für Transportgut auf einer Ladefläche, beispielsweise eines Lastkraftwagens, wird in Querrichtung zur Transportrichtung ein Haltegurt über das Transportgut gelegt und der Gurt links und rechts seitlich neben dem Transportgut auf der Ladefläche befestigt. Durch Spannen des Zurrgurts wird das Transportgut gegen die Ladefläche verklemmt, so dass ein seitliches bzw. Querverrutschen des Transportguts erschwert wird. An der Seite verläuft der Zurrgurt von der Oberkante des Transportgurts leicht schräg zur Ladefläche, wie dies in Fig. 12 schematisch dargestellt ist. Bei Querbeschleunigung ist das Transportgut durch einen sehr geringen Querhalt bzw. Seitenhalt gesichert und die Hauptwirkung dieser Art von Sicherung besteht darin, das Transportgut gegen die Ladefläche zu pressen und durch die erhöhte Haftreibung das Transportgut zu sichern. Der Druck durch den Gurt auf das Transportgut zur Erhöhung der Anlagekraft zwischen Transportgut und Ladefläche ist begrenzt, da mit steigender Zugspannung des Gurts das Transportgut beschädigt werden kann.

Es ist daher Aufgabe der Erfindung, eine Transportsicherungsanordnung vorzusehen, die eine besonders wirksame Sicherung des Transportguts gegen Querkräfte ermöglicht.

Diese Aufgabe wird mit den Merkmalen des Anspruchs 1 gelöst.

Gemäß Anspruch 1 weist die Transportsicherungsanordnung zwei miteinander verbundene Elemente oder zwei Abschnitte eines Elements auf, wobei das auf dem Transportgut aufliegende Element das seitlich am Transportgut anliegende Element bzw. der auf dem Transportgut aufliegende Abschnitt den seitlich anliegenden Abschnitt gegen vertikales Abrutschen sichert. Vom seitlich anliegenden Element bzw. Abschnitt verläuft ein Zug- oder Zurrelement zur gegenüberliegenden Seite des Transportguts, welches dort an der Ladefläche befestigt oder dort umgelenkt ist. Bei Auftreten einer Querbeschleunigung (z.B. quer zur Fahrtrichtung der Ladefläche eines Kraftwagens) wirkt durch eine solche Diagonalverzurrung eine Seitenkraft über das seitliche Element bzw. den seitlichen Abschnitt und das Zurrelement auf das Transportgut. Dies verhindert wirkungsvoll einerseits ein Kippen des Transportguts und andererseits eine Verschiebung des Transportguts auf der Ladefläche.

Transportgut bedeutet hier eine, vorzugsweise zumindest zwei, oder mehrere Transporteinheiten, wie Paletten, Transportbehältnisse, Gitterboxen oder dergleichen. Vorzugsweise ist das Zug- oder Zurrelement vorgespannt, so dass das seitliche Element bzw. der seitliche Abschnitt eng und unter Vorspannung am Transportgut anliegt. Umfasst das Transportgut mehrere Transporteinheiten, so werden vorzugsweise zwei nebeneinander stehende Transporteinheiten auf einer Seite mit einer Transportsicherungseinrichtung gesichert, wobei das Zug- oder Zurrelement diagonal schräg zwischen den Transporteinheiten von dem seitlichen Haltelement bzw. Abschnitt zur Ladefläche verläuft. Bei individueller Sicherung einer einzelnen Transporteinheit verläuft vorzugsweise die Spanneinrichtung diagonal durch die Transporteinheit selbst.

Die beschriebene Transportsicherungsanordnung kann als einzelnes Transportgeschirr in einer Zurranordnung verwendet werden, wenn eine Sicherung gegen seitliches Abrutschen lediglich nach einer Seite erforderlich ist. Ganz besonders vorteilhaft wird eine Transportsicherungsanordnung mit einem Sicherungspaar vorgesehen, bei dem auf beiden Seiten des Transportguts bzw. einer Gruppe von Transporteinheiten seitliche Halteelemente bzw. Abschnitte vorgesehen sind, die mittels sich kreuzender (in Fahrtrichtung gesehen) Diagonalverzurrung jeweils an der Ladefläche im Bereich der gegenüberliegenden Seite des Transportguts gesichert sind. Dadurch ist das Transportgut gegen das seitliche Verschieben bei beiden Querbeschleunigungen abgesichert.

Bei einer vorteilhaften Ausgestaltung gemäß Anspruch 6 sind das Halteelement und das Vertikalhalteelement als getrennte Elemente ausgebildet und über ein Verbindungselement miteinander verbunden. Dabei lassen sich die Elemente unabhängig voneinander an geeigneten Stellen an das Transportgut anlegen und eine flexible Anpassung an das Transportgut und dessen Abmessungen bzw. Schwerpunktlage wird ermöglicht. Während einer Querbeschleunigung kann sich das belastete Zug- oder Zurrelement der Diagonalverzurrung ausdehnen (z.B. bis zu 7%). Sind die seitlichen Halteelemente an der ersten und zweiten (gegenüberliegenden) Seite des Transportguts über ein Verbindungselement verbunden, so wird mit der dehnungsbedingten Verschiebung des Transportguts das unbelastete Halteelement mit dem Transportgut verschoben, so dass das unbelastete Halteelement seine Position bzw. Anlage am Transportgut unverändert beibehält. Vorzugsweise ist das Verbindungselement ein Abschnitt des Zug- oder Zurrelements, beispielsweise ein durchgängiger Gurt, der mit den Halteelementen und Vertikalhalteelementen verbunden ist.

Durch Kürzen oder Verlängern der einzelnen Zug- oder Zurrelemente (Gurte) oder anderer Verbindungen (Verbindungselement) sind vorzugsweise die Halte- und/oder Vertikalhalteelemente individuell in Weite und Höhe zu platzieren. Die dadurch erreichte Flexibilität ermöglicht es die auftretenden Kräfte dort angreifen zu lassen, wo es am effektivsten bzw. für die Ware am schonensten ist.

Eine weitere Variante besteht in dem Einsatz von zwei Sicherungselementen in Form von Längsprofilen, die an zwei oder mehren Ladeeinheiten anliegen. Diese Elemente sind an den Endbereichen, bzw. außermittig mit mindestens zwei Gurten verbunden, die über das Transportgut geführt werden und somit ein Sicherungsgeschirr bilden. An den Längsprofilen werden die Zug- oder Zurrelemente (Spannelemente) direkt angeschlagen, diagonal zwischen Ladeeinheiten zur gegenüberliegenden Seite geführt und gespannt. Vorteilhaft ist eine Verstellbarkeit der Länge der Verbindungsgurte und oder der Längsprofile.

Bei der Ausgestaltung der Transportsicherungsanordnung gemäß Anspruch 3 sind Halteelement und Vertikalhalteelement einteilig ausgebildet, so dass zum Anlegen des Sicherungsgeschirrs weniger Handgriffe erforderlich sind. Vorteilhaft sind zumindest zwei solche einteiligen Halteelemente durch zumindest eine Querstrebe miteinander verbunden, wobei die Halteelemente am zu sichernden Transportgut angelegt und/oder befestigt werden. Besonders dann, wenn bei der Transportsicherungsanordnung ein erstes Halteelement an einem ersten Transportgut und ein zweites Halteelement an einem zweiten Transportgut jeweils an deren seitlichen Oberkante angelegt ist und im Bereich der Querstrebe eine Spann- bzw. Zurreinrichtung diagonal nach unten zur gegenüberliegenden Seite des ersten und zweiten Transportguts verläuft, wird bei einer Seitenbeschleunigung des Transportguts in Richtung Querstrebe von der Querstrebe bzw. dessen Halteelemente auf die seitliche Oberkante und die Seite des ersten und zweiten Transportguts eine Rückhaltekraft ausgeübt, so dass das Transportgut gegen ein Abrutschen gesichert ist.

Ganz besonders vorteilhaft sind die einteiligen Halteelemente winkelförmig ausgebildet, so dass sie bei der Einrichtung der Transportsicherung (beispielsweise auf einer Oberkante einer Palette, einer Box oder dergleichen) die einteiligen Halteelemente einfach abgelegt werden, die Spanneinrichtung zwischen oder durch die Transportguteinheit durchgezogen wird und auf der anderen Seite das Verspannen vorgenommen werden kann. Einerseits wird damit das Herunterfallen der abgelegten Halteelemente vermieden und andererseits durch den anderen Schenkel des Winkels eine seitliche Anlagefläche bei Querbeschleunigung bereitgestellt. In einer Ausführung kann dabei die zumindest eine Querstrebe selbst winkelförmig ausgebildet sein und als Halteelement dienen.

Mittels eines Hakens oder eines Vorsprungs an zumindest einem Halteelemente können diese beispielsweise an Gitterboxen oder bei in Säcken verpacktem Transportgut mittels der Haken oder Vorsprünge einfach in die Transportguteinheiten eingehängt werden, wenn beispielsweise am Transportgut keine Kanten zum Ablegen eines Winkelelements vorhanden sind. Die Halteelemente können vorteilhaft als Klauen oder Haken ausgebildet sein.

Ganz besonders vorteilhaft sind die Halteelemente verschiebbar und/oder austauschbar an der zumindest einen Querstrebe angeordnet bzw. gelagert oder die Querstrebe selbst ist ausziehbar, so dass in Abhängigkeit von der Länge bzw. Breite des Transportguts der Anlagebereich der Halteelemente am Transportgut bzw. an den Transportguteinheiten einstellbar ist. Bei zwei nebeneinander liegenden Palettenboxen wird beispielsweise das Halteelement so justiert, dass jedes ungefähr mittig an der Seitenkante der Palettenboxen anliegt, so dass bei Querbeschleunigung keine Drehmomente an den Palettenboxen aufgrund ungleichmäßiger Rückhaltekraft auftreten.

Durch ein Verstellelement 16 zwischen Halteelement und Auflageelement bzw. Auflageabschnitt ist die Höhe eines oder mehrer der Halteelemente an ggf. unterschiedliche Höhen der Transportguteinheiten anpassbar, so dass die zumindest eine Querstrebe auch dann horizontal verläuft, wenn die Halteelemente jeweils an einer Oberkante oder dergl. der Transportguteinheit angelegt werden.

Besonders vorteilhaft ist zwischen zwei Halteelementen an der Querstrebe, vorzugsweise in der Mitte oder ungefähr mittig der zumindest einen Querstrebe, ein Befestigungspunkt oder -element für zumindest ein Zug- oder Zurrelement angeordnet, so dass das Anlegen eines Zurr- oder Halteelements an der Querstrebe schnell und auf einfache Weise erfolgt. Sind bei einer Transportsicherungsanordnung mehr als zwei beabstandete Halteelemente wie oben beschrieben angeordnet, so kann jeweils oder zwischen ausgewählten Halteelementen ein Befestigungspunkt oder -element vorgesehen sein. Dadurch lassen sich hier mehrere Diagonalverzurrungen für eine Transportsicherungsanordnung vorsehen.

Vorteilhaft ist das eine Ende des Zug- oder Zurrelements fest mit dem Halteelement Transportsicherungseinrichtung bzw. zumindest einer Querstrebe der Halteelemente verbunden, so dass zur Transportsicherung nur das andere, freie Ende des Zug- oder Zurrelements auf der Ladefläche oder einer damit verbundenen Sicherungseinrichtung befestigt werden muss.

Bei einer weiteren Ausgestaltung weist die Transportsicherungsanordnung eine Spanneinrichtung für das Zug- oder Zurrelement auf, so dass dieses beispielsweise mittels einer Ratschenmechanik vorgespannt werden kann. Daher muss lediglich das freie Ende des Zug- oder Zurrelements auf der Ladefläche an einer Öse, einem Haken oder dergleichen befestigt werden und mit Anlegen der Transportsicherungsanordnung am Transportgut kann durch Betätigen der Spanneinrichtung das Zug- oder Zurrelement unter Spannung gesetzt werden, so dass das Transportsicherungsgeschirr sicher am Transportgut anliegt.

Bei Transport von einheitlichem Ladegut auf der Ladefläche (Getränkekästen, Einheitspalettenboxen, Paletten mit gleichem Baumaterial oder dergleichen) erstreckt sich die Transportsicherungsanordnung vorteilhaft über mehrere Transportguteinheiten und weist mehrere gleichbeabstandete Halteelemente auf. Durch Sicherung mit einer oder mehreren Diagonalverzurrungen ist die Transportsicherung schnell zu installieren. Der Abstand der Halteelemente ist vorzugsweise auf das einheitliche Ladegut abgestimmt.

Durch eine Höhenverstelleinrichtung ist die Höhe des oder der Halteelemente über der Ladefläche einstellbar, so dass diese entsprechend der Höhe der Transportguteinheiten einstellbar ist. Besonders bei einheitlichen Transportguteinheiten und dem Einsatz einer Transportsicherungsanordnung, die sich über viele nebeneinander stehende Transportguteinheiten erstreckt, ist das Sichern der Ladung für die zuständige Person erheblich vereinfacht und die körperliche Belastung reduziert. Vorteilhaft ist dabei das oder sind die Halteelemente an einem Seil 19 oder Band gelagert, wobei das Seil oder Band an einem Aufbauteil 18 der Ladefläche mit veränderbarer Länge befestigt oder umgelenkt ist. Durch Einsatz einer Winde, eines Seilzugs oder einem Kettenantriebs ist die Länge zwischen Aufbauteil und Transportsicherungseinrichtung veränderbar.

Vorteilhaft wird das Zug- oder Zurrelement über die Grundfläche der Transportguteinheiten hinaus gezogen, so dass das Zug- oder Zurrelement nicht in einem unzugängigen Bereich zwischen den Transportguteinheiten zu befestigen ist.

Vorteilhaft ist bei der Transportanordnung im Seitenbereich der Ladefläche ein Führungselement 13 vorgesehen, das durch zumindest zwei voneinander beabstandete Verbindungselemente 12 mit der Ladefläche verbunden ist, wobei zwischen jeweils zwei der Verbindungselemente zumindest ein Umlenk- oder Spannelement verschiebbar am Führungselement gelagert ist. In Ausgestaltung ist das Führungselement ein Führungsgurt oder -seil und/oder die beabstandeten Verbindungselemente sind an der Ladefläche befestigte Ösen. Das Umlenk- oder Spannelement kann eine Öse, ein Ring oder ein Karabinerhaken sein.

Ausführungsbeispiele der Erfindung werden anhand von Figuren näher erläutert. Es zeigen:
- Fig. 1: eine erste Ausführung eines Sicherungsgeschirrs mit separatem Seitenhalter/Auflageelement in Seitenansicht längs der Fahrtrichtung,
- Fig. 2A-B: eine zweite Ausführung eines Sicherungsgeschirrs mit zwei Auflageelementen in Seitenansicht quer zur Fahrtrichtung, in Draufsicht und in Querschnitt zwischen Boxen,
- Fig. 3: Kräftevektoren bei auftretenden Querkräften
- Fig. 4A-4B: verschiedene Ansichten einer direkten Palettensicherung mit Längsprofil als dritte Ausführung,
- Fig. 5: eine vierte Ausführung einer Ladungssicherungsanodnung bei Transport von einheitlichem Ladegut,
- Fig. 6: eine fünfte Ausführung mit durch einen Verbindungsgurt gesicherten Haltewinkeln,
- Fig. 7A-7C: verschiedene Ansichten einer Diagonalverzurrung von Transportboxen auf einer Ladefläche,
- Fig. 8: die Kraftvektoren bei der Diagonalverzurrung von Fig. 7,
- Fig. 9: eine flexible Verzurrpunktanordnung am Beispiel der Diagonalverzurrung,
- Fig. 10: eine weitere Ausführungsform einer Sicherungsschiene,
- Fig. 11: eine Transportsicherungsanordnung bei Transport von einheitlichem Ladegut, und
- Fig. 12: die Kräftevektoren bei der herkömmlichen Verzurrung einer Transportbox.

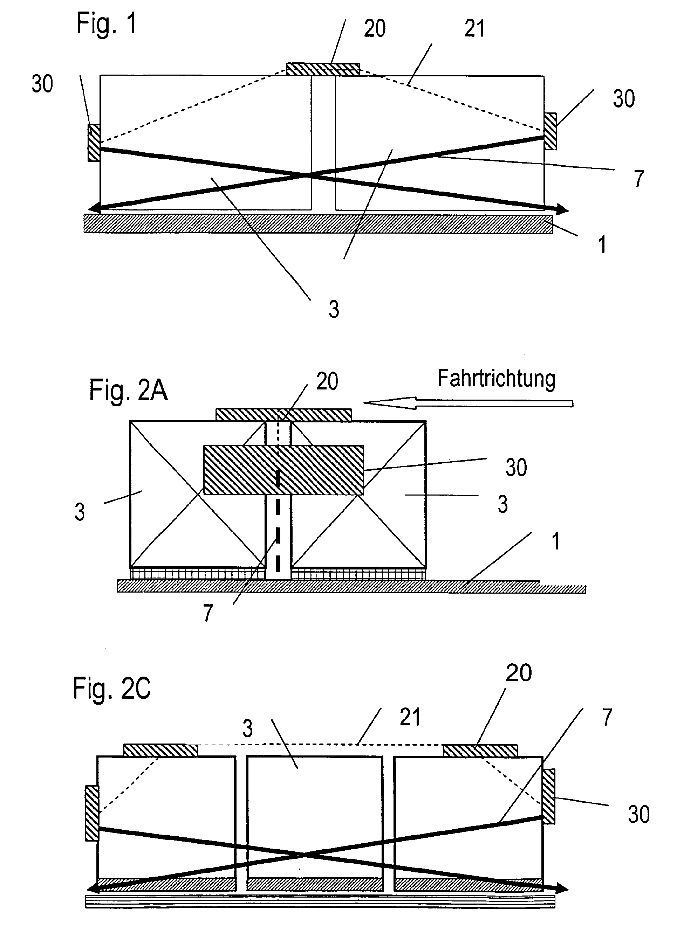

Fig. 1 stellt eine erste Ausführungsform einer Diagonalverzurrung zweier Transportboxen 3 dar. Die Figur im Querschnitt quer zur Fahrtrichtung zeigt zwei Ladeeinheiten (Transportboxen 3). An der rechten Seite der rechten Box 3 liegt ein Sicherungselement (Halteplatte) 30. Dieses Sicherungselement 30 ist mit einem Gurt 21, der über ein Auflageelement 20, das auf dem Transportgut 3 liegt, mit dem Sicherungselement 30 an der linken Flanke der linken Transportbox 3 verbunden. An diesen Elementen 30 greifen Zurrgurte 7, die die Sicherungskraft übertragen. Hier verlaufen die Zurrgurte 7 und der Haltegurt 21 durch die Boxen 3. In weiterer Ausgestaltung können jeweils seitlich die Zurrgurte 7 verlaufen. Gleiche oder gleichwirkende Elemente werden im Folgenden mit den gleichen Bezugszeichen bezeichnet.

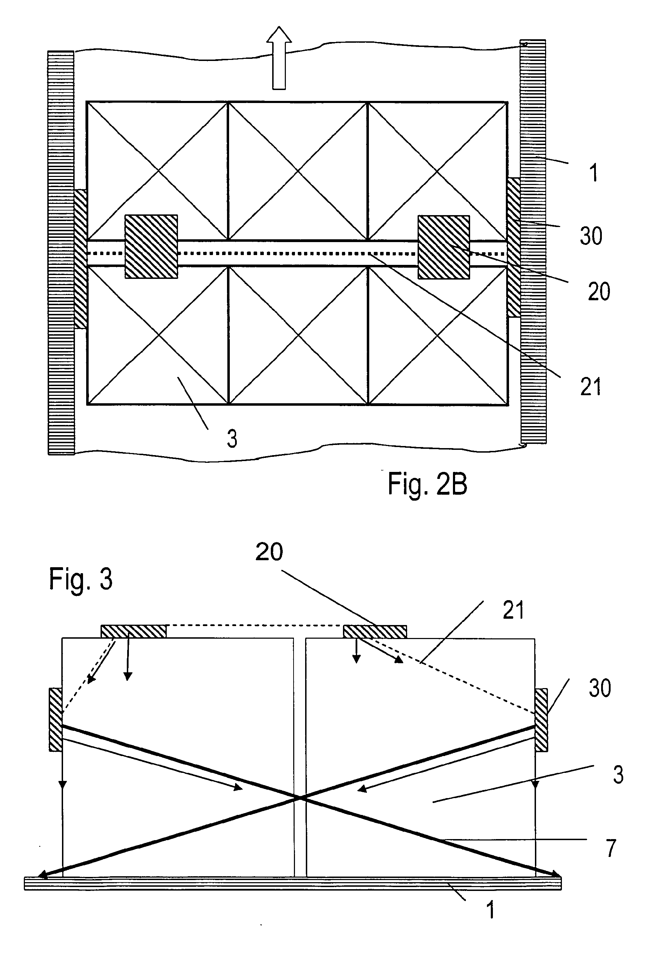

Die Fig. 2A bis 2C zeigen schematisch das Anlegen der Sicherungselemente bei einer zweiten Ausführung mit zwei Auflageelementen 20. Die Ladefläche 1 ist in Fig. 2A in Seitenansicht längs zur Fahrtrichtung, in Fig. 2B in Draufsicht und in Fig. 2C im Querschnitt quer zur Fahrtrichtung dargestellt. Auf der Ladefläche ist auf sechs Paletten jeweils eine Transportbox 3 abgestellt. In Fig. 2 liegt ein Sicherungspaar 30 verbunden mit einem Gurt 21 etwa mittig auf bzw. an zwei Boxen 3. Der Sicherungsgurt 7 angeschlagen am seitlichen Halteelement 30 führt zur gegenüberliegenden Seite zur Ladefläche 1.

Fig. 3 zeigt zwei gesicherte Ladeeinheiten 3 im Querschnitt quer zur Fahrtrichtung. Kräftevektoren sind durch Pfeile dargestellt. Das rechte Auflageelement 20, das das seitlich rechts anliegende Halteelement 30 hält, ist im Vergleich zum linken Auflageelement 20 weiter zur Mitte zwischen den Boxen 3 auf der rechten Box 3 aufgelegt.

Dadurch wird erreicht, dass die senkrecht nach unten wirkende Kraft geringer ist, als die senkrecht wirkende Kraft des linken Auflageelements 20.

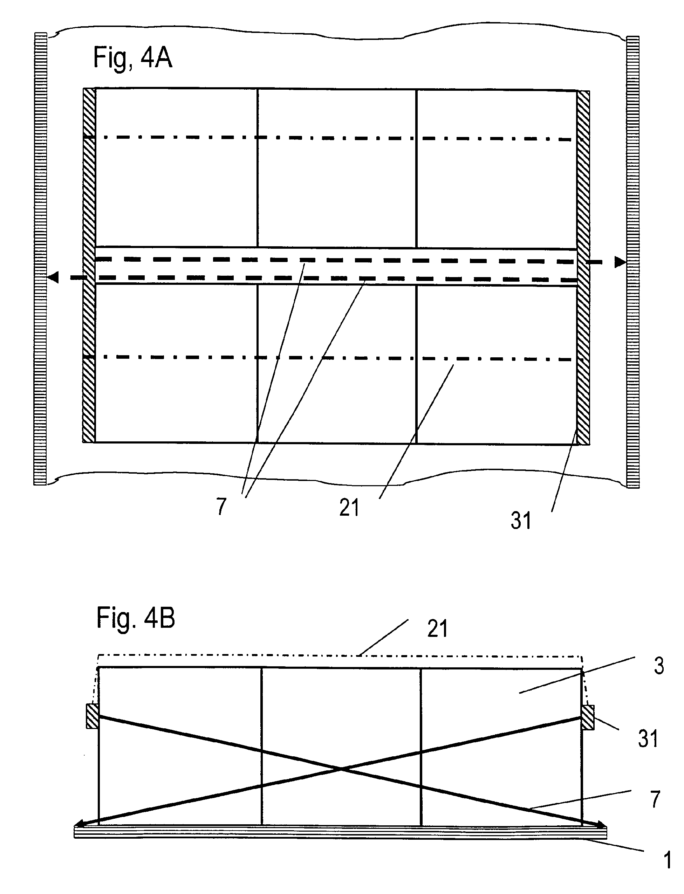

Die Fig. 4A und 4B zeigen schematisch Ansichten einer Diagonalverzurrung von sechs Ladeeinheiten (z.B. Boxen 3) auf einer Ladefläche 1 eines Lastkraftwagens. Fig. 4A zeigt die Draufsicht und Fig. 4B den Querschnitt quer zur Fahrtrichtung. Die sechs Ladeeinheiten sind mittels Sicherungselementen 31 in der Ausführung eines Längsprofiles seitlich nach Diagonalverzurrung mittels der Zurrgurte 7 gesichert. Die Sicherungselemente 31 sind mit einem Verbindungsgurt 21 verbunden und gegen Abrutschen bzw. Herabfallen gesichert.

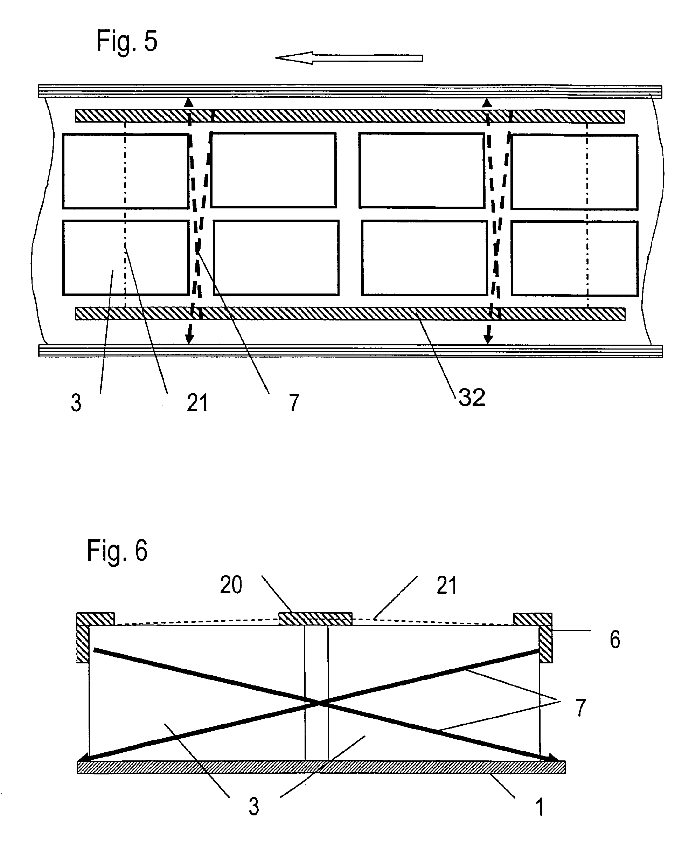

Fig. 5 zeigt in der Draufsicht acht einheitliche Ladeeinheiten 3 gesichert mittels Halteelementen in der Ausführung eines Längsprofiles 32. Die Zeichnung soll darstellen, dass es nicht zwingend erforderlich ist, zwischen jeder Ladeeinheit 3 bzw. jeweils zwischen zwei in Fahrtrichtung nebeneinander stehenden Ladeeinheiten 3 diagonal zu zurren, falls die Rückhaltekräfte ausreichend sind. Ebenso kann ein seitliches Halteelement 30 eine, zwei oder mehr als zwei Ladeeinheiten 3 seitlich sichern.

Fig. 6 zeigt die schematische Ansicht einer weiteren Ausführungsform einer Diagonalverzurrungsanordnung. Die Zeichnung im Querschnitt quer zur Fahrtrichtung stellt zwei gesicherte Ladeeinheiten 3 auf einer Ladefläche 1 dar. Beide Transportboxen bzw. Ladeeinheiten 3 sind mit Gurten 7 diagonal verzurrt. Auf der rechten Oberkante der rechten Box 3 ist ein Winkelelement bzw. Winkeleisen 6 mit Sicherungsschiene 5 aufgelegt, entsprechend liegt auf der linken Box 3 ein solches Winkelelement 6. Beide Winkelelemente sind mit einem Gurt 21 der über eine Auflage 20 geführt wird verbunden. Wie Fig. 4 und 5 zeigen, ist eine separate Auflage 20 neben dem Haltegurt 21 jedoch nicht in jedem Fall erforderlich. An den Sicherungsschienen 5 sind Zurrgurte 7 angelegt, die diagonal nach unten zur Ladefläche 1 geführt sind. Ausgestaltungen der unten beschriebenen Winkelelemente sind auch für diese Anordnung der Fig. 6 einsetzbar.

Bei den Ausführungsformen der Fig. 1 bis 6 können die Zurrgurte 7 und der Haltegurt 21 als getrennte Elemente vorgesehen oder als durchlaufendes Element vorgesehen sein. Die seitlichen Halteelemente 20 und/oder die Auflage(n) 30 und/oder die Winkelelemente 6 können an dem oder den Gurten 7, 21 fixiert oder verschiebbar angeordnet sein. Bei den verschiebbaren Elementen 20, 30 und/oder 6 kann ein Feststellelement zum Fixieren des verschiebbaren Elements am Gurt 7 oder 21 vorgesehen sein. Bei der Fig. 6 stellen die Winkelelemente 6 eine Kombination der seitlichen Halteelemente 30 und der Auflageelemente 20 der Fig. 1 bis 5 dar. Bei den folgenden Ausführungsformen kommen ebenfalls seitliche Halteelemente zum Einsatz, die das Aufliegen (vertikale Abstützung) und das seitliche Halten durch ein Kombinationselement bewirken.

Die Halteelemente 30 bzw. 20 können in Form und Material variieren. Besonders vorteilhaft ist das Anbringen diverser Befestigungspunkte, so dass das Anlegen eines Zurrgurtes 7, 21 oder dergleichen schnell und einfach erfolgen kann. Ganz besonders vorteilhaft sind die seitlichen Halteelemente 30 mit einer oder mehreren Aufnahmemöglichkeiten für eine oder mehreren Sicherungsschienen oder ähnliches ausgestattet. Vorzugsweise weisen die Halteelemente 30 eine Aufnahmevorrichtung zur Aufnahme eines Längsprofils auf, so dass mehrere Halteelemente 30 über das Längsprofil verbindbar sind. In Ausgestaltung der Ladungssicherungsanordnungen sind die Halteelemente 30 flächig ausgebildet, beispielsweise in Form eines Gitters, in Form von gekreuzten Streben, als Vollmaterial mit Aufnahmemöglichkeiten für die Gurte 7, 21. Vorteilhaft ist das eine Ende des Zug- oder Zurrelements 7 fest mit dem Halteelement 30 zu verbinden, so dass zur Transportsicherung nur das andere, freie Ende des Zug- oder Zurrelements 7 auf der Ladefläche 1 oder einer damit verbundenen Sicherungseinrichtung befestigt werden muss. Bei einer weiteren Ausgestaltung ist an dem oder den Haltelementen 30 eine Spanneinrichtung für das Zug- oder Zurrelement 7 angebracht. Mittels dieser Einrichtung, beispielsweise einem Ratschenmechanismus, kann das Zurr- oder Zugelement 7 vorgespannt werden. Es muss lediglich das freie Ende des Zug- oder Zurrelements auf der Ladefläche 1, Zurröse oder dergleichen befestigt werden und das Zug- oder Zurrelement kann gespannt werden. Die Befestigung der Gurte erfolgt vorteilhaft auf Höhe etwa der Längsmittenachse der Halteelemente 30 oder miteinander auf einer Seite verbundener Halteelemente 30. Das Halteelement 32 kann aus einem Längsprofil 6 ausgebildet sein. Vorzugsweise sind die Gurte 21 längenverstellbar.

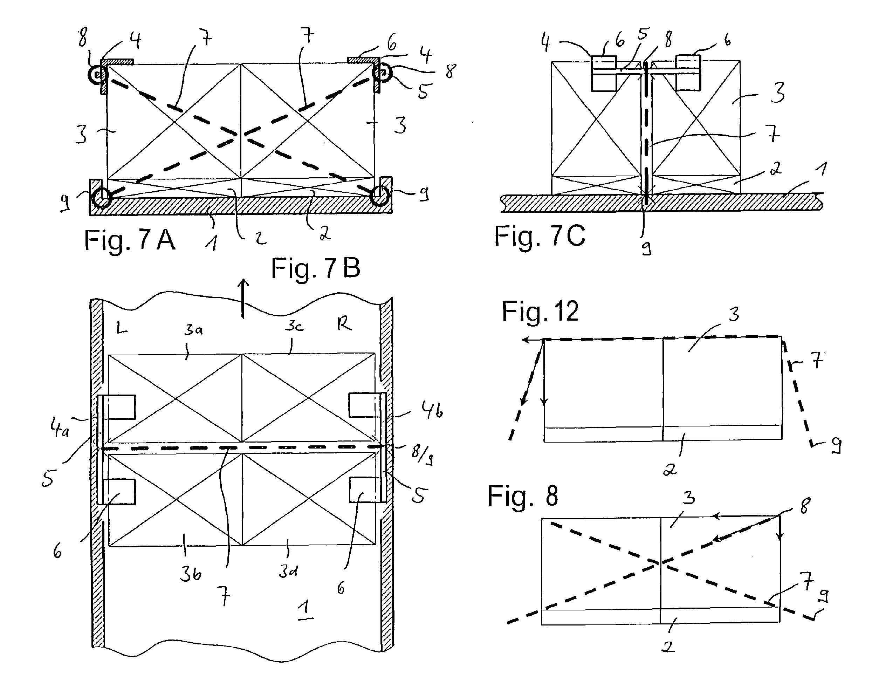

Die Fig. 7A-7C zeigen schematisch Ansichten einer Diagonalverzurrungsanordnung auf einer Ladefläche 1 eines Lastkraftwagens. Die Ladefläche 1 ist in Fig. 7A im Querschnitt quer zur Fahrtrichtung, in Fig. 7B in Draufsicht und in Fig. 7C im Querschnitt längs der Fahrtrichtung dargestellt. Auf der Ladefläche lagern auf vier Paletten 2 jeweils eine Transportbox 3, wobei sowohl in Fahrtrichtung als auch quer zur Fahrtrichtung jeweils zwei Transportboxen 3 bzw. Paletten 2 nebeneinander liegend angeordnet sind. In Fig. 7B ist die Fahrtrichtung mit dem Pfeil dargestellt und entsprechend die linke und rechte Ladeseite mit L und R bezeichnet. Auf die obere, rechte Oberkante der beiden rechts stehenden Transportboxen 3c, 3d ist eine Sicherungsschiene 4b aufgelegt und entsprechend eine Sicherungsschiene 4a auf der gegenüberliegenden Seite auf der linken Oberkante der linken beiden Transportboxen 3a, 3b. Jede Sicherungsschiene 4a, 4b (im Folgenden kurz mit 4 bezeichnet) liegt mit einem Winkeleisen 6 auf einer vorne stehenden Transportbox 3a, 3c und mit einem Winkeleisen 6 auf einer hinteren Transportbox 3b, 3d auf. Die Winkeleisen 6 sind mit einem Querträger 5 verbunden. Der Querträger 5 verläuft auf der Außenseite eines der Schenkel der Winkeleisen 6, wobei die Winkeleisen bzw. die Sicherungsschiene 4a, 4b derart orientiert auf den Transportboxen 3a, 3b, 3c, 3d (im folgenden kurz 3 genannt) abgelegt ist, dass der Querträger 5 seitlich außerhalb der Seiten der Transportboxen und unterhalb deren Oberkante verläuft (siehe Fig. 7A).

In Querrichtung können mehr als die zwei dargestellten Transportboxen (3a, 3c oder 3b, 3d) bzw. Transportguteinheiten nebeneinander liegend angeordnet sein. Vorzugsweise werden jedoch in Längs- bzw. Fahrtrichtung durch die Sicherungsschiene 4 jeweils zwei Transportboxen bzw. Transportguteinheiten gesichert, wobei jeweils eines der Winkeleisen 6 oder ein Halteelement der Sicherungsschiene 4 auf der vorderen und hinteren Transportbox 3 bzw. Transportguteinheit aufliegt. Wie in den Fig. 7A-7C nicht näher dargestellt, ist an der Rückseite der Winkeleisen 6 ein Vierkantrohrprofil aufgeschweißt, durch das der Vierkantquerträger 5 durchgeschoben ist. In vorgegebenem Rastermaß sind am Querträger 5 Bohrungen und jeweils eine Bohrung am Vierkantrohr der Winkeleisen 6 vorgesehen. Mittels Sicherungssplinten, die durch die Bohrung des Vierkantrohrs am Winkeleisen 6 und durch die Löcher im Querträger 5 gesteckt sind, lassen sich die Winkeleisen 6 mit verstellbarem Abstand an den Querträgem sichern, so dass sich die Sicherungsschiene 4 durch Verstellen des Abstands der Winkeleisen 6 vom Mittelpunkt an verschiedene Boxenabmessungen anpassen lassen.

Um bei einer Querbeschleunigung (in Fig. 7B Querbeschleunigung der Boxen 3 nach links oder rechts) ein Drehmoment bzw. ein Herausdrehen der Boxen weitgehend zu vermeiden, wird der Abstand der Winkeleisen 6 zueinander so eingestellt, dass die Winkeleisen 6 möglichst in der Mitte der Seitenlänge jeweils der Transportbox 3 zu liegen kommt.

In der Mitte des Querträgers 5 ist ein Langloch vorgesehen, durch das ein Zurrgurt 7 gezogen ist. Durch das Langloch verschiebt sich der Zurrgurt nicht in Längsrichtung des Querträgers und ist daher mittig zu diesem ausgerichtet. Damit ist der Zurrgurt 7 an einer mittigen Verbindung 8 des Querträgers 5 fixiert. Der Zurrgurt 7 ist von der Sicherungsschiene 4 durch einen Spalt zwischen den Transportboxen 3 hindurch zur gegenüberliegenden Unterseite der Boxen geführt, wo der Zurrgurt 7 an einem Zurrpunkt 9 auf der Ladefläche festgemacht oder durch einen Umlenkpunkt der Ladefläche gezogen ist. Umgekehrt kann auch vorgesehen sein, dass der Zurrgurt 7 am Zurrpunkt 9 der Ladefläche befestigt ist und das Verzurren oben am Verbindungspunkt 8 der Sicherungsschiene 4 erfolgt. In beiden Fällen sind durch das Verzurren der linken und rechten Sicherungsschiene 4 die Transportboxen 3 mit einer Vorspannung gesichert, so dass eine vorgegebene Vorspannung zwischen den Oberkanten der Transportboxen 3 und von der Oberkante in Richtung Ladefläche ausgeübt wird. Die Vorspannung zwischen den Boxen 3 hemmt zusätzlich eine relative Längsverschiebung der Boxen zueinander.

Fig. 8 zeigt ein Diagramm der vom Zurrgurt 7 auf die obere, diagonal gegenüberliegende Seitenkante ausgeübten Kräfte. Wie ersichtlich, wird bei einer auftretenden Querbeschleunigung, d.h. einer Belastung des Zurrgurts, ein großer Kraftanteil in horizontaler Richtung entgegen der Fliehkraft der Transportbox 3 aufgebracht, so dass ein Kippen oder seitliches Abrutschen der Transportbox 3 bis zu sehr hohen Querbeschleunigungen unterbunden ist. Dagegen zeigt Fig. 12 die herkömmliche Sicherung durch Querverspannung des Zurrgurts, wobei die am Gurt auftretende Kraft aufgrund der Querbeschleunigung überwiegend zu einer Erhöhung des Auflagedrucks der Transportbox 3 auf der Ladefläche führt, während die Kraftkomponente, die der Querbeschleunigung entgegen wirkt, sehr gering ist.

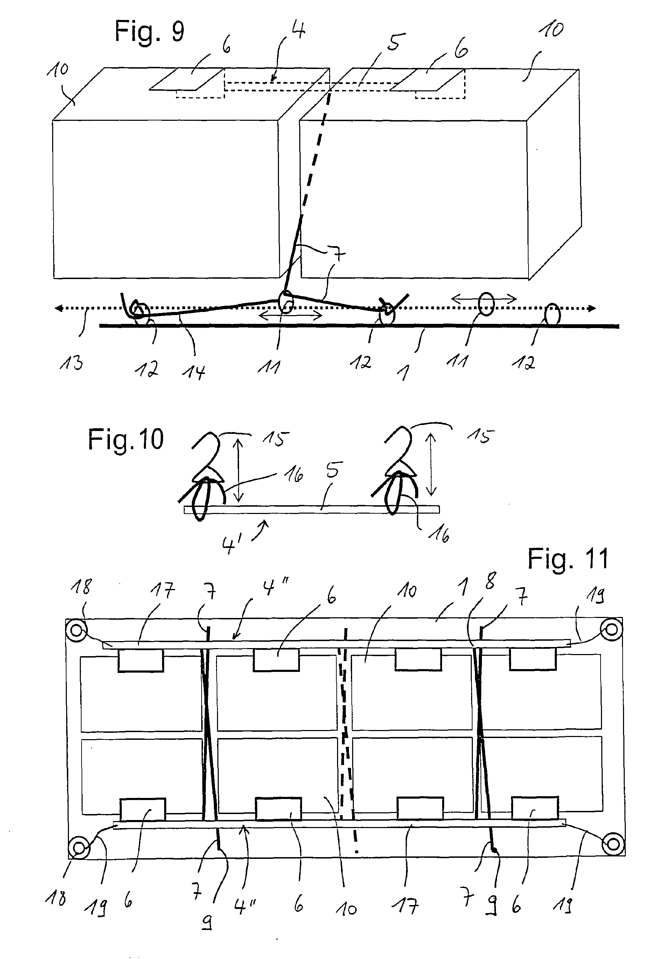

Fig. 9 zeigt eine flexible Anordnung von Verzurrpunkten für eine Ladefläche, wie sie bei diesem Ausführungsbeispiel mit einer Transportschiene 4 zum Einsatz kommt. Eine solche Verzurrpunktanordnung ist jedoch allgemein bei der Verzurrung von Ladegut anwendbar. Auf der Ladefläche 1, die lediglich als Strich angedeutet ist, sind zwei Transportboxen 10 abgestellt und gesichert. Eine wie in den Figuren Fig. 7A-7C verwendete Sicherungsschiene 4 mit den Winkeleisen 6 und dem Querträger 5 ist auf die hintere, obere Seitenkante der Transportboxen 10 aufgelegt. Der Zurrgurt 7 verläuft vom Querträger 5 diagonal zwischen den Transportboxen 10 zur vorderen, unteren Seite, wo er in einer Schiebeöse 11 als Zurrpunkt umgelenkt ist. Das freie Ende des Zurrgurts 7 ist an einer Fixöse 12 befestigt, wobei dies hier die mittlere dargestellte Fixöse 12 ist. Die Fixösen 12 sind in vorgegebenen Abständen an der Ladefläche 1 befestigt und durch die Fixösen 12 ist ein Führungsgurt 13 gezogen, der an seinen Enden an der Ladefläche befestigt ist, beispielsweise über weitere Fixösen 12 am vorderen und hinteren Ende der Ladefläche 1. Zwischen den Fixösen 12 sind die Schiebeösen 11 (hier lediglich jeweils eine Schiebeöse zwischen je zwei Fixösen 12 dargestellt) verschiebbar am Führungsgurt 13 gelagert. Die Schiebeöse 11 wird am gewünschten Umlenkpunkt mit einem Arretierungsgurt 14 festgehalten durch das Zusammenwirken der Umlenkung des Zurrgurts 7 und dem Arretierungsgurt 14. Der Arretierungsgurt 14 ist an einer gegenüberliegenden Fixöse 12 festgebunden und verzurrt.

Fig. 10 zeigt eine zweite Ausführungsform einer Sicherungsschiene 4', bei der zwei Haken 15 mittels einer Schlaufe am Querträger 5 befestigt sind. Die Schlaufenlänge ist für jede Schlaufe 16 verstellbar, so dass auch bei unterschiedlicher Einhängungshöhe der Haken 15 am Transportgut die Schlaufenlänge so angepasst werden kann, dass der Querträger 5 horizontal oder ungefähr horizontal seitlich am Transportgut entlang verläuft.

Fig. 11 zeigt schematisch die Sicherungsanordnung bei Transport von einheitlichem Ladegut. Einheitliches Ladegut heißt hier, dass Transporteinheiten mit gleichen Außenabmessungen oder Transportgut mit ähnlichen Außenabmessungen transportiert wird.
Im dargestellten Fall sind acht Transportboxen 10 auf der Ladefläche 1 abgestellt. Zur Ladungssicherung wird an beiden Seiten der Ladefläche eine Sicherungsschiene 4" gemäß einer dritten Ausführungsform eingesetzt. Die Sicherungsschiene 4" weist ein Langprofil 17 auf, bei dem vier Winkeleisen mit einem Mittelabstand entsprechend des Mittelabstandes der Transportboxen 10 angeordnet sind. Zwischen der ersten und zweiten Reihe der Transportboxen 10 und der dritten und vierten Reihe der Transportboxen 10 ist jeweils eine Diagonalverzurrung mit zwei Zurrgurten 7 vorgesehen, wobei jeweils ein Zurrgurt 7 von einem Verbindungspunkt 8 zwischen je zwei Winkeleisen 6 zu einem diagonal gegenüberliegenden Zurrpunkt 9 verläuft. Die Diagonalverzurrung entspricht hier im Wesentlichen derjenigen von Fig. 7A. Je nach Schwere des Transportguts bzw. der Transportboxen 10 und der Stabilität des Langprofils 17 kann zusätzlich zwischen der zweiten und dritten Reihe von Transportboxen 10 ebenfalls eine Diagonalverzurrung vorgesehen sein. Bei einer weiteren Ausführung können zwei Diagonalverzurrungen zusätzlich oder alternativ an den Enden der Sicherungsschiene 4" vorgesehen sein.

Die Sicherungsschiene 4" ist an beiden Enden des Langprofils 17 durch ein Drahtseil 19 aufgehängt, das wiederum mit einer Säule 18 des Aufbaus auf der Ladefläche 1 verbunden ist. Das Drahtseil 19 ist an einer Oberseite der Säule 18 mittels einer Umlenkrolle umgelenkt (nicht dargestellt) und wird im unteren Bereich der Säule 18 durch eine Winde verkürzt oder verlängert, so dass durch Auf- oder Abwinden des Drahtseils 19 die Höhe der Sicherungsschiene 4" oberhalb der Ladefläche 1 veränderbar ist. Dies dient der einfachen Anpassung an die Höhe der Transportboxen 10 oder der Anpassung, wenn mehrere Transportboxen 10 übereinander gestapelt sind und die Sicherung an der oberen Seitenkante der jeweils obersten Transportbox erfolgen soll.

## Patentansprüche

1. Transportsicherungsanordnung für auf einer Ladefläche (1) zu sicherndes Transportgut (3, 10) mit zumindest einem seitlich am Transportgut anordenbarem Halteelement (5, 6, 15, 30), zumindest einem Vertikalhalteelement (6, 15, 20, 21) und zumindest einem mit dem zumindest einen Halteelement (5, 6, 15, 30) verbundenen Zug- oder Zurrelement (7), wobei
das zumindest eine Vertikalhalteelement (6, 15, 20, 21) das zumindest eine Halteelement (5, 6, 15, 30) in vertikale Richtung beabstandet zur Ladefläche (1) hält, vorzugsweise im oberen Seitenbereich des Transportguts (3, 10), und
das zumindest eine Zug- oder Zurrelement (7) von dem Halteelement (5, 6, 15, 30) zur gegenüberliegenden Seite des Transportguts verläuft und im Bereich der gegenüberliegenden Seite des Transportguts an der Ladefläche (1) befestigt oder dort umgelenkt ist.

2. Anordnung nach Anspruch 1, wobei zumindest ein an einer ersten Seite des Transportguts (1) anordenbares Halteelement (5, 6, 15, 30), zumindest ein an einer zweiten Seite des Transportguts anordenbares Halteelement (5, 6, 15, 30) und zumindest ein Vertikalhalteelement (6, 15, 20, 21) vorgesehen sind, wobei
das zumindest eine Vertikalhalteelement (6, 15, 20, 21) das zumindest eine Halteelement an der ersten Seite des Transportguts und/oder das zumindest eine Halteelement an der zweiten Seite des Transportguts in vertikale Richtung beabstandet zur Ladefläche (1) hält,
zumindest ein Zug- oder Zurrelement (7) von dem Halteelement (5, 6, 15, 30) an der ersten Seite des Transportguts zur gegenüberliegenden zweiten Seite des Transportguts verläuft und im Bereich der zweiten Seite des Transportguts an der Ladefläche (1) befestigt oder dort umgelenkt ist, und
zumindest ein Zug- oder Zurrelement (7) von dem Halteelement (5, 6, 15, 30) an der zweiten Seite des Transportguts zur gegenüberliegenden ersten Seite des Transportguts verläuft und im Bereich der ersten Seite des Transportguts an der Ladefläche (1) befestigt oder dort umgelenkt ist.

3. Anordnung nach Anspruch 1 oder 2, wobei zumindest eines der Halteelemente und eines der Vertikalhalteelemente als einteiliges Element (6) ausgebildet sind.

4. Anordnung nach Anspruch 2, wobei zwei einteilige Elemente (6) durch zumindest eine Querstrebe (5, 17) miteinander verbunden sind.

5. Anordnung nach Anspruch 4, wobei das zumindest eine einteilige Element (6) winkelförmig ausgebildet ist.

6. Anordnung nach Anspruch 1 oder 2, wobei zumindest ein Halteelement (6, 30, 31, 32) und zumindest ein Vertikalhalteelement (20, 21) über das Zug- oder Zurrelement (7) oder ein Verbindungselement (21) miteinander verbunden sind.

7. Anordnung nach Anspruch 2, wobei zumindest ein Halteelement (6, 30, 31, 32) an der ersten Seite des Transportguts (3, 10), zumindest ein Halteelement (6, 30, 31, 32) an der zweiten Seite des Transportguts (3, 10) und zumindest ein Vertikalhalteelement (20, 21) über das Zug- oder Zurrelement (7) oder ein Verbindungselement (21) miteinander verbunden sind.

8. Anordnung nach Anspruch 6 oder 7, wobei das Verbindungselement (21) als Vertikalhalteelement wirkt.

9. Anordnung nach Anspruch 6, 7 oder 8, wobei die Länge des Verbindungselements (21) einstellbar ist und/oder die Position des zumindest einen Vertikalhalteelements (20) am Verbindungselement (21) veränderbar ist.

10. Anordnung nach einem der vorhergehenden Ansprüche, wobei das Transportgut zumindest zwei Einheiten (3, 10) umfasst und sich zumindest ein Halteelement seitlich über zumindest zwei Einheiten (3, 10) und/oder über die Länge der Ladefläche (1) erstreckt oder mehrere Halteelemente beabstandet angeordnet und über zumindest eine Querstrebe verbunden sind, wobei sich die zumindest eine Querstrebe über zumindest zwei Einheiten (3,10) und/oder die Länge der Ladefläche (1) erstreckt.

11. Anordnung nach einem der vorhergehenden Ansprüche, wobei dem zumindest einen Zug- oder Zurrelement (7) eine Spanneinrichtung zugeordnet ist.

12. Anordnung nach einem der vorhergehenden Ansprüche, wobei mittels einer Höhenverstelleinrichtung (18, 19) die vertikale Höhe des zumindest einen Halteelements (6, 15, 20, 21) über der Ladefläche (1) veränderbar ist.
